# EUROPEAN PATENT SPECIFICATION

(11) **EP 4 279 369 B1**
(45) Date of publication and mention of the grant of the patent: **25.09.2024**
(21) Application number: 22174490.7
(22) Date of filing: 20.05.2022
(51) Int. Cl.: B62M 6/45, B62M 6/80, B62M 19/00, B62J 45/412

(54) **APPARATUS AND METHOD FOR DRIVING AN ELECTRIC BICYCLE**
VORRICHTUNG UND VERFAHREN ZUM ANTRIEB EINES ELEKTRISCHEN FAHRRADES
APPAREIL ET PROCÉDÉ D'ENTRAÎNEMENT D'UNE BICYCLETTE ÉLECTRIQUE

(43) Date of publication of application: 22.11.2023
(73) Proprietor: HL Mando Corporation, Pyeongtaek-si, Gyeonggi-do (KR)
(72) Inventor: Paick, In Ha, 05117 Seoul (KR); Lee, Seung Kyung, 14021 Anyang-si, Gyeonggi-do (KR); Hong, Kyung Ho, 05615 Seoul (KR)
(74) Representative: Gulde & Partner

(56) References cited:
- EP-A1- 3 064 423
- EP-A1- 3 620 323
- DE-A1- 102013 214 169
- FR-A1- 3 104 538
- JP-A- 2010 187 479
- KR-A- 20120 129 064
- KR-A- 20210 110 238
- KR-B1- 101 896 022
- US-A1- 2012 226 400
- US-A1- 2016 362 021

## Description

### TECHNICAL FIELD

The present disclosure relates to an electric bicycle, and more particularly, to a technology for boosting driving of an electric bicycle without a chain.

### BACKGROUND

Electric bicycles use electricity to turn a motor to assist human force or to drive a bicycle. A mode in which a power of motor assists a force that a person steps on pedals to drive wheels is called a PAS (Pedal Assistance System) mode, and a mode in which the wheels are driven only by the power of the motor by pulling the handle is called a throttle mode.

Since the throttle mode moves the electric bicycle only with the power of the motor, there is no need for a pedal or a chain for transmitting the force of the pedal like a conventional bicycle. For example, the US 2012/0226400 A1 teaches a power-assisted system to be assembled to a derailleur-equipped bicycle including a microcomputer which uses an auxiliary-force comparison table and a determining logic circuit to output a suitable auxiliary force. However, since people feel awkward about bicycles without pedals, there are also electric bicycles that use chainless bicycles to charge the battery by turning the pedals.

Chainless electric bicycles recognize the speed at which the user turns the pedals and control the speed of the motor in proportion to the speed. The pedals are not chained, so no load is applied to them. Therefore, in order to create a feeling of pedal load like a bicycle with a chain, a generator connected to the pedal is controlled. If the load on the pedal is controlled according to the speed of the electric bicycle, the user will feel the pedal feeling similar to that of a regular bicycle with a chain. The US 2016/0362021 A1 discloses an apparatus for driving a chainless electric bicycle, comprising: a pedal sensor configured to measure a speed of a pedal of the electric bicycle; a wheel sensor configured to measure a speed of a driving wheel of the electric bicycle; and a driving controller configured to control a speed of a motor for driving the driving wheel according to a speed difference between the pedal and the driving wheel; wherein the driving controller is configured to increase a control current of the motor in a boosting mode set by a user's boosting control for a certain period of time compared to a previous driving. The US 2016/0362021 A1 also discloses an apparatus for driving a chainless electric bicycle, comprising: a pedal sensor configured to measure a speed of a pedal of the electric bicycle, said pedal rotating a generator; a wheel sensor configured to measure a speed of a driving wheel of the electric bicycle, said driving wheel being driven by a motor; and a driving controller configured to control a speed of the generator for driving the driving wheel according to a speed difference between the pedal and the driving wheel; wherein the driving controller is configured to decrease a control current of the generator in a boosting mode set by a user's boosting control for a certain period of time compared to a previous driving.

The KR 101 896 022 B1 discloses a system for driving an electrical bicycle where the rotational position of the drive wheel is synchronized with the rotational position of the pedal.

However, if a pedal feel similar to that of a bicycle with a chain is created on an electric bicycle without a chain, there is a problem that much greater power than normal driving is required when acceleration is required for a sudden start or overtaking.

The inventors of the present disclosure have been researching and trying to solve the driving problem of such a related art chainless electric bicycle. The present disclosure has been completed after much effort in order to complete an electric bicycle that can obtain a desired sense of acceleration without applying a large amount of force when rapid acceleration (boosting) driving is required.

### SUMMARY

### Technical Problem

The present disclosure is directed to providing an apparatus and method for controlling a boosting mode that enables safe electric bicycle operation while providing convenience to users by providing the boosting mode when rapid acceleration is required, such as when starting or overtaking an electric bicycle.

Meanwhile, other aspects not specified of the present disclosure will be additionally contemplated within the range that can be easily inferred from the following detailed description and effects thereof.

### Technical Solution

The invention is set out in the appended set of claims.

An apparatus for driving a chainless electric bicycle according to the invention is disclosed in claim 1.

The driving controller may increase the increasing current of the motor for a predetermined first time after the start of the boosting mode and decrease it for a predetermined second time before the end of the boosting mode.

An apparatus for driving a chainless electric bicycle according to another aspect of the invention is disclosed in claim 3.

The driving controller may decrease the decreasing current of the generator for a predetermined third time after the start of the boosting mode and increase it for a predetermined fourth time before the end of the boosting mode.

The driving controller may control a boosting control button of the electric bicycle to be pressed for a predetermined time or longer, and enter the boosting mode only when a speed of the pedal measured by the pedal sensor becomes faster than before the boosting control button is pressed.

The driving controller may control the boosting mode not to operate for a predetermined time after controlling the boosting mode for the certain period of time.

The driving controller stops the boosting mode when a speed of the pedal measured by the pedal sensor is 0 or the operation of a brake lever of the electric bicycle is detected.

In addition, a method for driving a chainless electric bicycle according to an aspect of the invention is disclosed in claim 7.

The generating an additional current of the motor may include generating the additional current of the motor in proportion to the current speed of the electric bicycle.

The generating an additional current of the motor may increase the current of the motor for a predetermined first time after the start of the boosting mode and decrease it for a predetermined second time before the end of the boosting mode.

A method for driving a chainless electric bicycle according to another aspect of the invention is disclosed in claim 10.

The generating a reduced current of the generator may decrease the current of the generator for a predetermined third time after the start of the boosting mode and increase it for a predetermined fourth time before the end of the boosting mode.

The determining whether it is a boosting mode may control a boosting control button of the electric bicycle to be pressed for a predetermined time or longer, and determine as the boosting mode only when a measured speed of the pedal becomes faster than before the boosting control button is pressed.

The determining whether it is a boosting mode may do not enter the boosting mode if a predetermined time has not elapsed after the end of a previous boosting mode.

The generating an additional current of the motor or the generating a reduced current of the generator does not generate the additional current of the motor or the reduced current of the generator and stops the boosting mode when a speed of the pedal is 0 or the operation of a brake lever of the electric bicycle is detected.

### Advantageous Effects

According to the present disclosure, it is possible to provide a safe and convenient boosting mode by operating the boosting mode by checking a user's intention in two or more steps when the user needs it.

In the meantime, even if there is an effect not explicitly specified herein, it is added that the effects expected by the technical features of the present disclosure and described effects and provisional effects thereof in the following specification are regarded as described in the specification of the present disclosure.

### BRIEF DESCRIPTION OF THE DRAWINGS

FIG. 1 is a schematic structural diagram of an apparatus for driving an electric bicycle according to a preferred embodiment of the present disclosure.
FIG. 2 is a more detailed structural diagram of a driving controller according to a preferred embodiment of the present disclosure.
FIG. 3 shows a change aspect in a motor additional driving current according to a preferred embodiment of the present disclosure.
FIG. 4 is a schematic flowchart of a method for driving an electric bicycle according to a preferred embodiment of the present disclosure.
FIG. 5 is a more detailed structural diagram of a driving controller according to another preferred embodiment of the present disclosure.
FIG. 6 shows a change aspect in a generator driving current according to another preferred embodiment of the present disclosure.
FIG. 7 is a schematic flowchart of a method for driving an electric bicycle according to another preferred embodiment of the present disclosure.

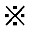 The accompanying drawings are exemplified by reference for understanding the technical idea of the present disclosure, and the scope of the present disclosure is not limited thereto.

### DETAILED DESCRIPTION OF THE EMBODIMENTS

Hereinafter, a configuration of the present disclosure guided by various embodiments of the present disclosure and effects resulting from the configuration will be described with reference to the drawings. In describing the present disclosure, when it is determined that a detailed description of a related known function obvious to those skilled in the art may unnecessarily obscure the subject matter of the present disclosure, the detailed description thereof will be omitted.

Terms such as 'first' and 'second' may be used to describe various elements, but, the above elements should not be limited by the terms above. The above terms may be used only for the purpose of distinguishing one element from another. For example, without departing from the scope of the present disclosure, a `first element' may be named a 'second element' and similarly, a 'second element' may also be named a `first element.' In addition, expressions in the singular include plural expressions unless explicitly expressed otherwise in the context. Unless otherwise defined, terms used in the embodiments of the present disclosure may be interpreted as meanings commonly known to those of ordinary skill in the art.

Hereinafter, a configuration of the present disclosure guided by various embodiments of the present disclosure and effects resulting from the configuration will be described with reference to the drawings.

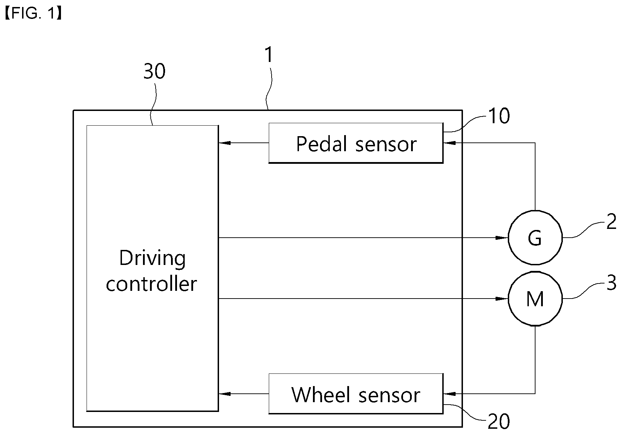

FIG. 1 is a schematic structural diagram of an apparatus for driving an electric bicycle according to a preferred embodiment of the present disclosure.

The apparatus 1 for driving an electric bicycle according to the present disclosure includes a pedal sensor 10, a wheel sensor 20, and a driving controller 30.

The pedal sensor 10 measures a position or speed of a pedal for rotating a generator 2.

The wheel sensor 20 measures a position or speed of a driving wheel. The electric bicycle is without a chain and the driving wheel is driven only by the motor 3.

The driving controller 30 generates a current for driving the motor 3 by the position or speed of the pedal and the position or speed of the driving wheel.

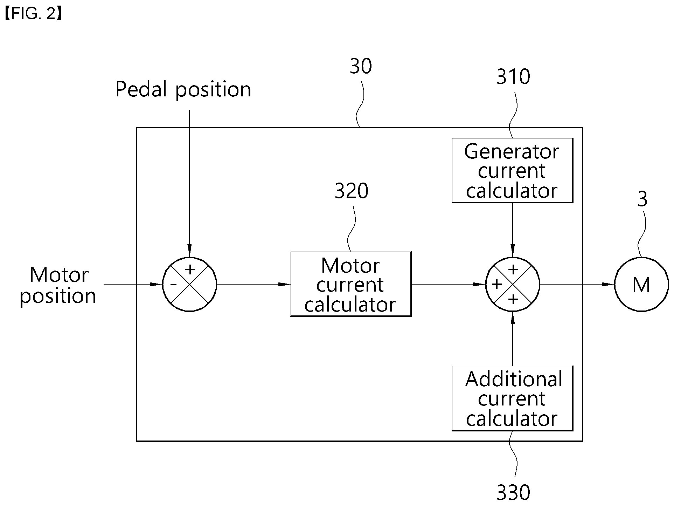

FIG. 2 is a more detailed structural diagram of a driving controller according to a preferred embodiment of the present disclosure.

The driving controller 30 according to the present disclosure includes a generator current calculator 310, a motor current calculator 320, and an additional current calculator 330. To this end, the driving controller 30 includes one or more processors and memories.

The electric bicycle controls the motor 3 so that the speed of the motor increases as the speed of the pedal increases, like a general bicycle. To this end, a current for controlling the motor 3 is generated based on a difference between the position or speed of the pedal and the position or speed of the driving wheel.

When the position of the pedal and the position of the driving wheel are used, the motor current calculator 320 determines a current for driving the motor 3 by using the difference between the position of the pedal and the position of the motor 3 connected to the driving wheel. At this time, the same gear ratio as that of a general bicycle can be considered, and the degree of assistance of the motor can be considered according to the driving mode.

In order to apply a boost mode for rapid acceleration here, the generator current calculator 310 may be controlled to generate a larger current compared to the position of the pedal.

Another method of applying the boost mode is to generate, by the additional current calculator 330, an additional current for rapid acceleration to the driving current of the motor 3 determined by the generator current calculator 310 and the motor current calculator 320.

By driving the motor 3 by the finally determined motor driving current, the driving controller 30 can apply the boosting mode.

The determination process is similar in the case of using the pedal speed and the motor speed instead of the pedal position and the motor position. The motor current calculator 320 determines a basic motor 3 driving current by the difference value between the pedal speed and the motor speed, and the generator current calculator 310 and the additional current calculator 330 determine a motor additional current for the boosting mode.

In order to enter the boosting mode for rapid acceleration, the user's intention to enter the boosting mode should first be checked.

In the case of simply entering the boosting mode with the boosting mode button, etc., if the user accidentally touches the button, due to a sudden start, there may be a risk of an accident or the user may feel uncomfortable.

Accordingly, to enter the boosting mode, an algorithm that double or triple checks the user's intention can be applied. For example, the boosting mode may be activated only when the pedaling speed becomes faster than before while pressing and holding the boosting mode button on the human machine interface (HMI) of the electric bicycle for more than 3 seconds. Alternatively, a brake may be applied when a brake lever is pulled for a long time, and the boosting mode may be activated when the pedal is pressed quickly while pulling the brake lever 2 or 3 times in short succession. In a state in which the boosting mode is activated, the driving controller 30 may display or sound on the HMI that the boosting mode is driving.

Upon entering the boosting mode, the driving controller 30 may perform acceleration by determining, by the motor current calculator 320, a basic motor 3 driving current and by generating, by the generator current calculator 310 and the additional current calculator 330, an additional current for driving the motor. For safety, the driving controller 30 may generate the additional current only for a predetermined period of time and stop the boosting mode. In addition, in order to prevent abuse of boosting mode and reduce battery consumption, after using boosting mode once, it may be restricted so that it can be used again after a certain period of time.

The magnitude of the current for boosting generated by the driving controller 30 may vary according to a current driving speed. For example, it generates about 20% additional current at low speed, 30% additional current at high speed, and so on. By generating an additional current in proportion to the current driving speed, the risk of an accident or the user's impact caused by rapid acceleration may be alleviated. Also, it is possible to limit the additional current of the motor 3 so that the speed does not increase beyond a predetermined maximum speed even while generating a 20% or 30% additional current.

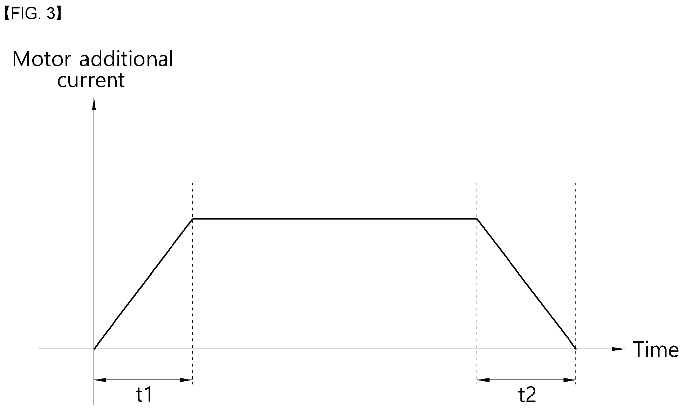

FIG. 3 shows a change aspect in a motor additional driving current according to a preferred embodiment of the present disclosure.

If the motor additional driving current for acceleration is suddenly applied, the electric bicycle may be shocked. Therefore, the added current can be gradually increased and gradually decreased.

As shown in FIG. 3, when the boosting mode starts, it is increased up to the target current for a predetermined first time t1, and the additional current for boosting is reduced to 0 for a predetermined second time t2 before the end of the boosting mode. The amount of the additional current that increases or decreases at the first time or the second time may be linear, as shown in FIG. 3, or may be non-linear like a logarithmic function or an exponential function.

The boosting mode is set to end after a certain period of time, but it may be ended even while the boosting mode is running, according to the user's intention. When the speed of the pedal measured by the pedal sensor 10 is 0 because the user does not step on the pedal, or when the brake is operated by the user operating the brake, the boosting mode is ended.

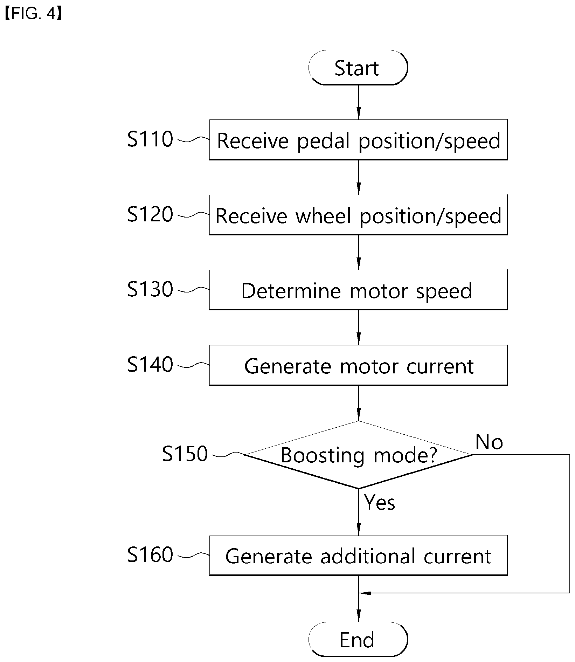

FIG. 4 is a flowchart once again summarizing a method for driving an electric bicycle according to a preferred embodiment of the present disclosure.

For driving the electric bicycle, first, a position or speed of the pedal is received at step S110 and a position or speed of the wheel is received at step S120.

The driving controller 30 determines a speed of the motor 3 for driving the electric bicycle by the difference between the received positions or speeds of the pedal and the driving wheel at step S130, and accordingly, generates a motor driving current at step S140.

It is determined whether the boosting mode is entered by the user's intention at step S150, and if it is the boosting mode, an additional current is generated at step S160.

In order to prevent the user from entering the boosting mode unintentionally, a second or third step of determining the user's intention to boosting may be performed. The details are the same as described above.

The motor additional current for boosting may vary depending on the current driving speed, and for safety reasons, maximum speed may be limited. In addition, in order to prevent sudden boosting, the current can be gradually increased or decreased at the start and end of boosting.

The boosting mode may be set to automatically end after a certain period of time and not operate again for a certain period of time after the end of the boosting mode.

In addition, if the user applies the brake or does not step on the pedal, the boosting mode is ended early even while the boosting mode is running.

According to the driving apparatus and method for controlling boosting of an electric bicycle of the present disclosure described above, by supplying additional current to the motor when needed, a desired acceleration by a user can be achieved, and a risk caused by a rapid acceleration can be prevented.

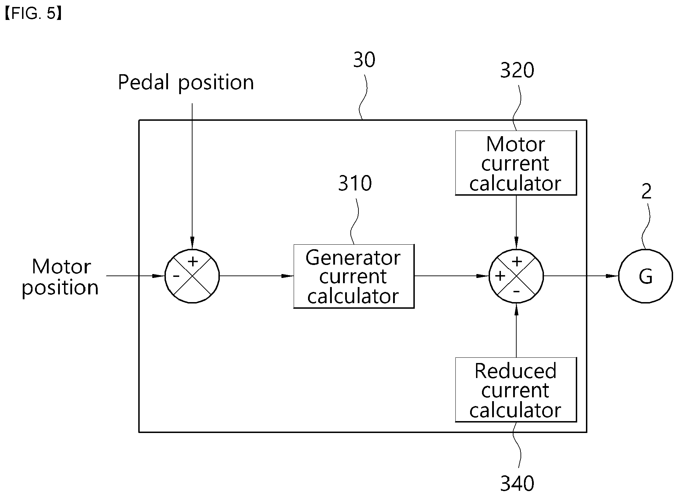

FIG. 5 is a more detailed structural diagram of a driving controller according to another preferred embodiment of the present disclosure.

The driving controller 30 according to the present disclosure includes a generator current calculator 310, a motor current calculator 320, and a reduced current calculator 340. To this end, the driving controller 30 includes one or more processors and memories.

Electric bicycles require greater driving force in situations such as hills and uphill roads. That is, the force applied to the pedal is required to be greater in a situation such as a hill or an uphill road than on a flat ground. In order to solve this problem, the driving controller 30 according to the present disclosure generates a current for controlling the generator 2 based on the difference between the position or speed of the pedal and the position or speed of the driving wheel.

When the position of the pedal and the position of the driving wheel are used, the generator current calculator 310 determines a current for driving the generator 2 by using the difference between the position of the pedal and the position of the motor 3 connected to the driving wheel. At this time, the same gear ratio as that of a general bicycle can be considered, and the degree of assistance of the motor 3 can be considered according to the driving mode.

In order to apply a boost mode for rapid acceleration here, the motor current calculator 320 may be controlled to generate a larger current compared to the position of the pedal.

Another method of applying the boost mode is to generate, by the reduced current calculator 340, a reduced current for rapid acceleration to the driving current of the generator 2 determined by the generator current calculator 310 and the motor current calculator 320.

By driving the generator 2 by the finally determined generator driving current, the driving controller 30 can apply the boosting mode.

The determination process is similar in the case of using the pedal speed and the motor speed instead of the pedal position and the motor position. The generator current calculator 310 determines a basic generator 2 driving current by the difference between the pedal speed and the motor speed, and the motor current calculator 320 and the reduced current calculator 340 determine a generator reduced current for the boosting mode.

In order to enter the boosting mode for rapid acceleration, the user's intention to enter the boosting mode should first be checked. The details regarding this are the same as described above.

Upon entering the boosting mode, the driving controller 30 may perform acceleration by determining, by the generator current calculator 310, a basic generator 2 driving current and by generating, by the motor current calculator 320 and the reduced current calculator 340, a reduced current for driving the generator. For safety, the driving controller 30 may generate the reduced current only for a predetermined period of time and stop the boosting mode. In addition, in order to prevent abuse of boosting mode and reduce battery consumption, after using boosting mode once, it may be restricted so that it can be used again after a certain period of time.

The magnitude of the current for boosting generated by the driving controller 30 may vary according to a current driving speed. For example, it generates about 20% reduced current at low speed, 30% reduced current at high speed, and so on. By generating a reduced current in proportion to the current driving speed, the risk of an accident or the user's impact caused by rapid acceleration may be alleviated. Also, it is possible to limit the reduced current of the generator 2 so that the speed does not increase beyond a predetermined maximum speed even while generating a 20% or 30% reduced current.

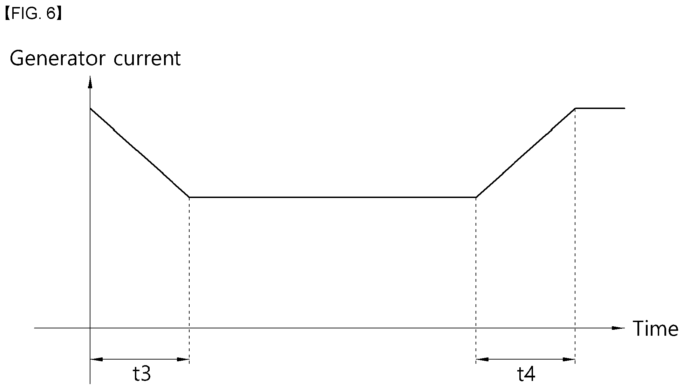

FIG. 6 shows a change aspect in a generator driving current according to another preferred embodiment of the present disclosure.

If the generator reduced driving current for acceleration is suddenly applied, the electric bicycle may be shocked. Therefore, the generator driving current can be gradually reduced and gradually returned.

As shown in FIG. 6, when the boosting mode starts, it is decreased up to the target current for a predetermined third time t3, and the reduced current for boosting is increased to 0 for a predetermined fourth time t4 before the end of the boosting mode. The amount of the reduced current that increases or decreases at the third time or the fourth time may be linear, as shown in FIG. 6, or may be non-linear like a logarithmic function or an exponential function.

The boosting mode is set to end after a certain period of time, but it may be ended even while the boosting mode is running, according to the user's intention. The details regarding this are the same as described above.

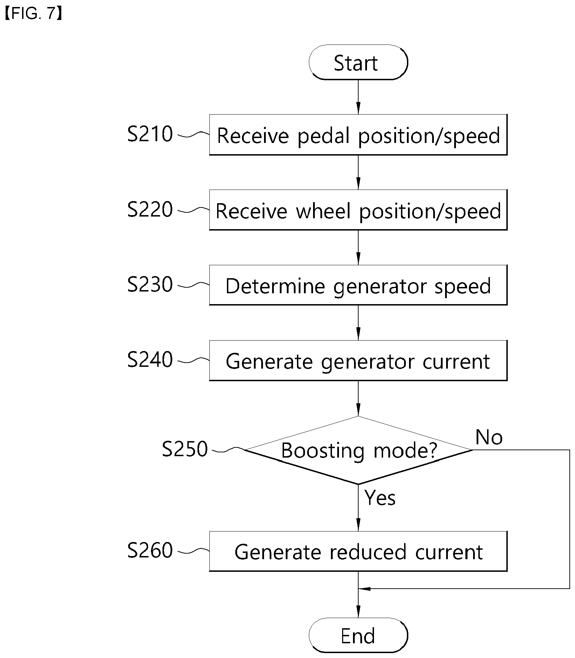

FIG. 7 is a flowchart once again summarizing a method for driving an electric bicycle according to another preferred embodiment of the present disclosure.

For driving the electric bicycle, first, a position or speed of the pedal is received at step S210 and a position or speed of the wheel is received at step S220.

The driving controller 30 determines a speed of the generator 2 for driving the electric bicycle by the difference between the received positions or speeds of the pedal and the driving wheel at step S230, and accordingly, generates a generator driving current at step S240.

It is determined whether the boosting mode is entered by the user's intention at step S250, and if it is the boosting mode, a reduced current is generated at step S260.

In order to prevent the user from entering the boosting mode unintentionally, a second or third step of determining the user's intention to boosting may be performed. The details are the same as described above.

The generator reduced current for boosting may vary depending on the current driving speed, and for safety reasons, maximum speed may be limited. In addition, in order to prevent sudden boosting, the current can be gradually increased or decreased at the start and end of boosting.

The boosting mode may be set to automatically end after a certain period of time and not operate again for a certain period of time after the end of the boosting mode.

In addition, if the user applies the brake or does not step on the pedal, the boosting mode is ended early even while the boosting mode is running.

According to the driving apparatus and method for controlling boosting of an electric bicycle of the present disclosure described above, by supplying reduced current to the generator when needed, a user can rotate the pedal with less force, and a risk caused by a rapid acceleration can be prevented.

The scope of the present invention is defined by the appended claims.

## Claims

1. An apparatus (1) for driving a chainless electric bicycle, comprising:
a pedal sensor (10) configured to measure a position or speed of a pedal of the electric bicycle;
a wheel sensor (20) configured to measure a position or speed of a driving wheel of the electric bicycle; and
a driving controller (30) configured to control a speed of a motor (3) for driving the driving wheel according to a position difference or speed difference between the pedal and the driving wheel;
wherein the driving controller (30) is configured to increase a control current of the motor (3) in a boosting mode set by a user's boosting control for a certain period of time compared to a previous driving,
**characterized in that**
the driving controller (30) is configured to stop the boosting mode when a speed of the pedal measured by the pedal sensor is 0 or the operation of a brake lever of the electric bicycle is detected.

2. The apparatus for driving a chainless electric bicycle of claim 1, wherein the driving controller (30) is configured to increase the increasing current of the motor for a predetermined first time after the start of the boosting mode and decreases it for a predetermined second time before the end of the boosting mode.

3. An apparatus (1) for driving a chainless electric bicycle, comprising:
a pedal sensor (10) configured to measure a position or speed of a pedal of the electric bicycle, said pedal rotating a generator (2);
a wheel sensor (20) configured to measure a position or speed of a driving wheel of the electric bicycle, said driving wheel being driven by a motor (3); and
a driving controller (30) configured to control a speed of the generator (2) for driving the driving wheel according to a position difference or speed difference between the pedal and the driving wheel;
wherein the driving controller (30) is configured to decrease a control current of the generator in a boosting mode set by a user's boosting control for a certain period of time compared to a previous driving,
**characterized in that**
the driving controller (30) is configured to stop the boosting mode when a speed of the pedal measured by the pedal sensor is 0 or the operation of a brake lever of the electric bicycle is detected.

4. The apparatus (1) for driving a chainless electric bicycle of claim 3, wherein the driving controller (30) is configured to decrease the decreasing current of the generator for a predetermined third time after the start of the boosting mode and increases it for a predetermined fourth time before the end of the boosting mode.

5. The apparatus for driving a chainless electric bicycle of claim 1 or claim 3, wherein the driving controller (30) is configured to control a boosting control button of the electric bicycle to be pressed for a predetermined time or longer, and enter the boosting mode only when a speed of the pedal measured by the pedal sensor becomes faster than before the boosting control button is pressed.

6. The apparatus (1) for driving a chainless electric bicycle of claim 1 or claim 3, wherein the driving controller (30) is configured to control the boosting mode not to operate for a predetermined time after controlling the boosting mode for the certain period of time.

7. A method for driving a chainless electric bicycle performed by a driving controller (30) of the chainless electric bicycle comprising one or more processors and memories, the method comprising:
measuring (S110) a position or speed of a pedal of the electric bicycle;
measuring (S120) a position or speed of a driving wheel of the electric bicycle;
determining (S130) a speed of a motor for driving the driving wheel based on a position difference or a speed difference between the pedal and the driving wheel;
generating (S140) a motor current for controlling the motor at the determined speed;
determining (S150) whether it is a boosting mode for acceleration set by a user's boosting control; and
generating (S160) an additional current of the motor for acceleration if the determination result is a boosting mode,
**characterized in that**
the generating an additional current of the motor does not generate the additional current of the motor and stops the boosting mode when a speed of the pedal is 0 or the operation of a brake lever of the electric bicycle is detected.

8. The method for driving a chainless electric bicycle of claim 7, wherein the generating an additional current of the motor comprises generating the additional current of the motor in proportion to the current speed of the electric bicycle.

9. The method for driving a chainless electric bicycle of claim 7, wherein the generating an additional current of the motor increases the current of the motor for a predetermined first time after the start of the boosting mode and decreases it for a predetermined second time before the end of the boosting mode.

10. A method for driving a chainless electric bicycle performed by a driving controller of the chainless electric bicycle comprising one or more processors and memories, the method comprising:
measuring (S210) a position or speed of a pedal of the electric bicycle, said pedal rotating a generator;
measuring (S220) a position or speed of a driving wheel of the electric bicycle, said driving wheel being rotated by a motor;
determining (S230) a speed of the generator for driving the driving wheel based on a position difference or a speed difference between the pedal and the driving wheel;
generating (S240) a generator current for controlling the generator at the determined speed;
determining (S250) whether it is a boosting mode for acceleration set by a user's boosting control; and
generating (S260) a reduced current of the generator if the determination result is a boosting mode,
**characterized in that**
the generating a reduced current of the generator does not generate the reduced current of the generator and stops the boosting mode when a speed of the pedal is 0 or the operation of a brake lever of the electric bicycle is detected.

11. The method for driving a chainless electric bicycle of claim 10, wherein the generating a reduced current of the generator decreases the current of the generator for a predetermined third time after the start of the boosting mode and increases it for a predetermined fourth time before the end of the boosting mode.

12. The method for driving a chainless electric bicycle of claim 7 or claim 10, wherein the determining whether it is a boosting mode controls a boosting control button of the electric bicycle to be pressed for a predetermined time or longer, and determines as the boosting mode only when a measured speed of the pedal becomes faster than before the boosting control button is pressed.

13. The method for driving a chainless electric bicycle of claim 7 or claim 10, wherein the determining whether it is a boosting mode does not enter the boosting mode if a predetermined time has not elapsed after the end of a previous boosting mode.

## Patentansprüche

1. Vorrichtung (1) zum Antrieb eines kettenlosen elektrischen Fahrrades, umfassend:
einen Pedalsensor (10), der dazu ausgestaltet ist, eine Position oder eine Geschwindigkeit eines Pedals des elektrischen Fahrrades zu messen;
einen Radsensor (20), der dazu ausgestaltet ist, eine Position oder eine Geschwindigkeit eines Antriebsrades des elektrischen Fahrrades zu messen; und
eine Antriebssteuereinheit (30), die dazu ausgestaltet ist, eine Geschwindigkeit eines Motors (3) zum Antrieb des Antriebsrades gemäß einer Positionsdifferenz oder einer Geschwindigkeitsdifferenz zwischen dem Pedal und dem Antriebsrad zu steuern;
wobei die Antriebssteuereinheit (30) dazu ausgestaltet ist, einen Steuerstrom des Motors (3) in einem Verstärkungsmodus, der durch eine Verstärkungssteuerung eines Benutzers für einen bestimmten Zeitraum eingestellt wird, gegenüber einem vorherigen Antrieb zu erhöhen,
**dadurch gekennzeichnet, dass**
die Antriebssteuereinheit (30) dazu ausgestaltet ist, den Verstärkungsmodus zu stoppen, wenn eine durch den Pedalsensor gemessene Geschwindigkeit des Pedals 0 beträgt oder die Betätigung eines Bremshebels des elektrischen Fahrrades erkannt wird.

2. Vorrichtung zum Antrieb eines kettenlosen elektrischen Fahrrades nach Anspruch 1, wobei die Antriebssteuereinheit (30) dazu ausgestaltet ist, den sich erhöhenden Strom des Motors für eine vorgegebene erste Zeit nach dem Start des Verstärkungsmodus zu erhöhen, und diesen für eine vorgegebene zweite Zeit vor dem Ende des Verstärkungsmodus verringert.

3. Vorrichtung (1) zum Antrieb eines kettenlosen elektrischen Fahrrades, umfassend:
einen Pedalsensor (10), der dazu ausgestaltet ist, eine Position oder eine Geschwindigkeit eines Pedals des elektrischen Fahrrades zu messen, wobei das Pedal einen Generator (2) dreht;
einen Radsensor (20), der dazu ausgestaltet ist, eine Position oder eine Geschwindigkeit eines Antriebsrades des elektrischen Fahrrades zu messen, wobei das Antriebsrad durch einen Motor (3) angetrieben wird; und
eine Antriebssteuereinheit (30), die dazu ausgestaltet ist, eine Geschwindigkeit des Generators (2) zum Antrieb des Antriebsrades gemäß einer Positionsdifferenz oder einer Geschwindigkeitsdifferenz zwischen dem Pedal und dem Antriebsrad zu steuern;
wobei die Antriebssteuereinheit (30) dazu ausgestaltet ist, einen Steuerstrom des Generators in einem Verstärkungsmodus, der durch eine Verstärkungssteuerung eines Benutzers für einen bestimmten Zeitraum eingestellt wird, gegenüber einem vorherigen Antrieb zu verringern,
**dadurch gekennzeichnet, dass**
die Antriebssteuereinheit (30) dazu ausgestaltet ist, den Verstärkungsmodus zu stoppen, wenn eine durch den Pedalsensor gemessene Geschwindigkeit des Pedals 0 beträgt oder die Betätigung eines Bremshebels des elektrischen Fahrrades erkannt wird.

4. Vorrichtung (1) zum Antrieb eines kettenlosen elektrischen Fahrrades nach Anspruch 3, wobei die Antriebssteuereinheit (30) dazu ausgestaltet ist, den sich verringernden Strom des Generators für eine vorgegebene dritte Zeit nach dem Start des Verstärkungsmodus zu verringern, und diesen für eine vorgegebene vierte Zeit vor dem Ende des Verstärkungsmodus erhöht.

5. Vorrichtung zum Antrieb eines kettenlosen elektrischen Fahrrades nach Anspruch 1 oder Anspruch 3, wobei die Antriebssteuereinheit (30) dazu ausgestaltet ist zu steuern, dass ein Verstärkungssteuerungsknopf des elektrischen Fahrrades für eine vorgegebene Zeit oder länger gedrückt wird, und nur dann in den Verstärkungsmodus zu wechseln, wenn eine durch den Pedalsensor gemessene Geschwindigkeit des Pedals schneller als vor dem Drücken des Verstärkungssteuerungsknopfes wird.

6. Vorrichtung (1) zum Antrieb eines kettenlosen elektrischen Fahrrades nach Anspruch 1 oder Anspruch 3, wobei die Antriebssteuereinheit (30) dazu ausgestaltet ist, den Verstärkungsmodus dazu zu steuern, für eine vorbestimmte Zeit nach dem Steuern des Verstärkungsmodus für den bestimmten Zeitraum nicht in Betrieb zu sein.

7. Verfahren zum Antrieb eines kettenlosen elektrischen Fahrrades, das durch eine Antriebssteuereinheit (30) des kettenlosen elektrischen Fahrrades durchgeführt wird, die einen oder mehrere Prozessoren und Speicher umfasst, wobei das Verfahren Folgendes umfasst:
Messen (S110) einer Position oder einer Geschwindigkeit eines Pedals des elektrischen Fahrrades;
Messen (S120) einer Position oder einer Geschwindigkeit eines Antriebsrades des elektrischen Fahrrades;
Bestimmen (S130) einer Geschwindigkeit eines Motors zum Antrieb des Antriebsrades basierend auf einer Positionsdifferenz oder einer Geschwindigkeitsdifferenz zwischen dem Pedal und dem Antriebsrad;
Erzeugen (S140) eines Motorstroms zum Steuern des Motors bei der bestimmten Geschwindigkeit;
Bestimmen (S150), ob es sich um einen Verstärkungsmodus zur Beschleunigung handelt, der durch eine Verstärkungssteuerung eines Benutzers eingestellt wurde; und
Erzeugen (S160) eines zusätzlichen Stromes des Motors zur Beschleunigung, wenn das Bestimmungsergebnis ein Verstärkungsmodus ist,
**dadurch gekennzeichnet, dass**
das Erzeugen eines zusätzlichen Stromes des Motors den zusätzlichen Strom des Motors nicht erzeugt und den Verstärkungsmodus stoppt, wenn eine Geschwindigkeit des Pedals 0 beträgt oder die Betätigung eines Bremshebels des elektrischen Fahrrades erkannt wird.

8. Verfahren zum Antrieb eines kettenlosen elektrischen Fahrrades nach Anspruch 7, wobei das Erzeugen eines zusätzlichen Stromes des Motors ein Erzeugen des zusätzlichen Stromes des Motors im Verhältnis zur aktuellen Geschwindigkeit des elektrischen Fahrrades umfasst.

9. Verfahren zum Antrieb eines kettenlosen elektrischen Fahrrades nach Anspruch 7, wobei das Erzeugen eines zusätzlichen Stromes des Motors den Strom des Motors für eine vorgegebene erste Zeit nach dem Start des Verstärkungsmodus erhöht und ihn für eine vorgegebene zweite Zeit vor dem Ende des Verstärkungsmodus verringert.

10. Verfahren zum Antrieb eines kettenlosen elektrischen Fahrrades, das durch eine Antriebssteuereinheit des kettenlosen elektrischen Fahrrades durchgeführt wird, die einen oder mehrere Prozessoren und Speicher umfasst, wobei das Verfahren Folgendes umfasst:
Messen (S210) einer Position oder einer Geschwindigkeit eines Pedals des elektrischen Fahrrades, wobei das Pedal einen Generator dreht;
Messen (S220) einer Position oder einer Geschwindigkeit eines Antriebsrades des elektrischen Fahrrades, wobei das Antriebsrad durch einen Motor gedreht wird;
Bestimmen (S230) einer Geschwindigkeit des Generators zum Antrieb des Antriebsrades basierend auf einer Positionsdifferenz oder einer Geschwindigkeitsdifferenz zwischen dem Pedal und dem Antriebsrad;
Erzeugen (S240) eines Generatorstroms zum Steuern des Generators bei der bestimmten Geschwindigkeit;
Bestimmen (S250), ob es sich um einen Verstärkungsmodus zur Beschleunigung handelt, der durch eine Verstärkungssteuerung eines Benutzers eingestellt wurde; und
Erzeugen (S260) eines reduzierten Stromes des Generators, wenn das Bestimmungsergebnis ein Verstärkungsmodus ist,
**dadurch gekennzeichnet, dass**
das Erzeugen eines reduzierten Stromes des Generators den reduzierten Strom des Generators nicht erzeugt und den Verstärkungsmodus stoppt, wenn eine Geschwindigkeit des Pedals 0 beträgt oder die Betätigung eines Bremshebels des elektrischen Fahrrades erkannt wird.

11. Verfahren zum Antrieb eines kettenlosen elektrischen Fahrrades nach Anspruch 10, wobei das Erzeugen eines reduzierten Stromes des Generators den Strom des Generators für eine vorgegebene dritte Zeit nach dem Start des Verstärkungsmodus verringert und ihn für eine vorgegebene vierte Zeit vor dem Ende des Verstärkungsmodus erhöht.

12. Verfahren zum Antrieb eines kettenlosen elektrischen Fahrrades nach Anspruch 7 oder Anspruch 10, wobei das Bestimmen, ob es sich um einen Verstärkungsmodus handelt, steuert, dass ein Verstärkungssteuerungsknopf des elektrischen Fahrrades für eine vorgegebene Zeit oder länger gedrückt wird, und den Verstärkungsmodus nur dann bestimmt, wenn eine gemessene Geschwindigkeit des Pedals schneller als vor dem Drücken des Verstärkungssteuerungsknopfes wird.

13. Verfahren zum Antrieb eines kettenlosen elektrischen Fahrrades nach Anspruch 7 oder Anspruch 10, wobei das Bestimmen, ob es sich um einen Verstärkungsmodus handelt, nicht in den Verstärkungsmodus wechselt, wenn nach dem Ende eines vorherigen Verstärkungsmodus eine vorgegebene Zeit noch nicht verstrichen ist.

## Revendications

1. Appareil (1) d'entraînement d'une bicyclette électrique sans chaîne, comprenant :
un capteur de pédale (10) conçu pour mesurer une position ou vitesse d'une pédale de la bicyclette électrique ;
un capteur de roue (20) conçu pour mesurer une position ou vitesse d'une roue motrice de la bicyclette électrique ; et
un contrôleur d'entraînement (30) conçu pour commander une vitesse d'un moteur (3) pour entraîner la roue motrice en fonction d'une différence de position ou différence de vitesse entre la pédale et la roue motrice ;
le contrôleur d'entraînement (30) étant conçu pour augmenter un courant de commande du moteur (3) dans un mode d'amplification défini par une commande d'amplification de l'utilisateur pendant une certaine période de temps en comparaison d'un entraînement précédent,
**caractérisé en ce que**
le contrôleur d'entraînement (30) est conçu pour arrêter le mode d'amplification lorsqu'une vitesse de la pédale mesurée par le capteur de pédale est égale à 0 ou lorsque l'actionnement d'un levier de frein de la bicyclette électrique est détecté.

2. Appareil d'entraînement d'une bicyclette électrique sans chaîne selon la revendication 1, le contrôleur d'entraînement (30) étant conçu pour augmenter le courant croissant du moteur pendant un premier temps prédéterminé après le début du mode d'amplification et le diminuer pendant un deuxième temps prédéterminé avant la fin du mode d'amplification.

3. Appareil (1) d'entraînement d'une bicyclette électrique sans chaîne, comprenant :
un capteur de pédale (10) conçu pour mesurer une position ou vitesse d'une pédale de la bicyclette électrique, ladite pédale faisant tourner un générateur (2) ;
un capteur de roue (20) conçu pour mesurer une position ou vitesse d'une roue motrice de la bicyclette électrique, ladite roue motrice étant entraînée par un moteur (3) ; et
un contrôleur d'entraînement (30) conçu pour commander une vitesse du générateur (2) pour entraîner la roue motrice en fonction d'une différence de position ou différence de vitesse entre la pédale et la roue motrice ;
le contrôleur d'entraînement (30) étant conçu pour diminuer un courant de commande du générateur dans un mode d'amplification défini par une commande d'amplification de l'utilisateur pendant une certaine période de temps en comparaison d'un entraînement précédent,
**caractérisé en ce que**
le contrôleur d'entraînement (30) est conçu pour arrêter le mode d'amplification lorsqu'une vitesse de la pédale mesurée par le capteur de pédale est égale à 0 ou que l'actionnement d'un levier de frein de la bicyclette électrique est détecté.

4. Appareil (1) d'entraînement d'une bicyclette électrique sans chaîne selon la revendication 3, le contrôleur d'entraînement (30) étant conçu pour diminuer le courant décroissant du générateur pendant un troisième temps prédéterminé après le début du mode d'amplification et l'augmenter pendant un quatrième temps prédéterminé avant la fin du mode d'amplification.

5. Appareil d'entraînement d'une bicyclette électrique sans chaîne selon la revendication 1 ou selon la revendication 3, le contrôleur d'entraînement (30) étant conçu pour commander un bouton de commande d'amplification de la bicyclette électrique pour être pressé pendant un temps prédéterminé ou plus longtemps, et entrer dans le mode d'amplification uniquement lorsqu'une vitesse de la pédale mesurée par le capteur de pédale devient plus rapide qu'avant que le bouton de commande d'amplification n'ait été pressé.

6. Appareil (1) d'entraînement d'une bicyclette électrique sans chaîne selon la revendication 1 ou selon la revendication 3, le contrôleur d'entraînement (30) étant conçu pour commander le mode d'amplification pour qu'il ne fonctionne pas pendant un temps prédéterminé après avoir commandé le mode d'amplification pendant une certaine période de temps.

7. Procédé d'entraînement d'une bicyclette électrique sans chaîne réalisé par un contrôleur d'entraînement (30) de la bicyclette électrique sans chaîne comprenant un ou plusieurs processeurs et mémoires, le procédé comprenant :
la mesure (S110) d'une position ou vitesse d'une pédale de la bicyclette électrique ;
la mesure (S120) d'une position ou vitesse d'une roue motrice de la bicyclette électrique ;
la détermination (S130) d'une vitesse d'un moteur pour entraîner la roue motrice sur la base d'une différence de position ou d'une différence de vitesse entre la pédale et la roue motrice ;
la génération (S140) d'un courant de moteur pour commander le moteur à la vitesse déterminée ;
la détermination (S150) de s'il s'agit d'un mode d'amplification pour l'accélération défini par une commande d'amplification de l'utilisateur ; et
la génération (S160) d'un courant supplémentaire du moteur pour l'accélération si le résultat de la détermination est un mode d'amplification,
**caractérisé en ce que**
la génération d'un courant supplémentaire du moteur ne génère pas le courant supplémentaire du moteur et arrête le mode d'amplification lorsqu'une vitesse de la pédale est égale à 0 ou que l'actionnement d'un levier de frein de la bicyclette électrique est détecté.

8. Procédé d'entraînement d'une bicyclette électrique sans chaîne selon la revendication 7, la génération d'un courant supplémentaire du moteur comprenant la génération du courant supplémentaire du moteur proportionnellement à la vitesse actuelle de la bicyclette électrique.

9. Procédé d'entraînement d'une bicyclette électrique sans chaîne selon la revendication 7, la génération d'un courant supplémentaire du moteur augmentant le courant du moteur pendant un premier temps prédéterminé après le début du mode d'amplification et le diminuant pendant un deuxième temps prédéterminé avant la fin du mode d'amplification.

10. Procédé d'entraînement d'une bicyclette électrique sans chaîne réalisé par un contrôleur d'entraînement de la bicyclette électrique sans chaîne comprenant un ou plusieurs processeurs et mémoires, le procédé comprenant :
la mesure (S210) d'une position ou vitesse d'une pédale de la bicyclette électrique, ladite pédale faisant tourner un générateur ;
la mesure (S220) d'une position ou vitesse d'une roue motrice de la bicyclette électrique, ladite roue motrice étant faite tourner par un moteur ;
la détermination (S230) d'une vitesse du générateur pour entraîner la roue motrice en fonction d'une différence de position ou d'une différence de vitesse entre la pédale et la roue motrice ;
la génération (S240) d'un courant de générateur pour commander le générateur à la vitesse déterminée ;
la détermination (S250) de s'il s'agit d'un mode d'amplification pour l'accélération défini par une commande d'amplification de l'utilisateur ; et
la génération (S260) d'un courant réduit du générateur si le résultat de la détermination est un mode d'amplification,
**caractérisé en ce que**
la génération d'un courant réduit du générateur ne génère pas le courant réduit du générateur et arrête le mode d'amplification lorsqu'une vitesse de la pédale est égale à 0 ou que l'actionnement d'un levier de frein de la bicyclette électrique est détecté.

11. Procédé d'entraînement d'une bicyclette électrique sans chaîne selon la revendication 10, la génération d'un courant réduit du générateur diminuant le courant du générateur pendant un troisième temps prédéterminé après le début du mode d'amplification et l'augmentant pendant un quatrième temps prédéterminé avant la fin du mode d'amplification.

12. Procédé d'entraînement d'une bicyclette électrique sans chaîne selon la revendication 7 ou selon la revendication 10, la détermination de s'il s'agit d'un mode d'amplification commandant un bouton de commande d'amplification de la bicyclette électrique pour être pressé pendant un temps prédéterminé ou plus longtemps, et déterminant qu'il s'agit du mode d'amplification uniquement lorsqu'une vitesse mesurée de la pédale devient plus rapide qu'avant que le bouton de commande de d'amplification n'ait été pressé.

13. Procédé d'entraînement d'une bicyclette électrique sans chaîne selon la revendication 7 ou selon la revendication 10, la détermination de s'il s'agit d'un mode d'amplification n'entrant pas dans le mode d'amplification si un temps prédéterminé ne s'est pas écoulé après la fin d'un mode d'amplification précédent.
